(19) Europäisches Patentamt European Patent Office Office européen des brevets

(11) **EP 4 564 237 A1**

(12) **EUROPEAN PATENT APPLICATION**

(43) Date of publication:
**04.06.2025 Bulletin 2025/23**

(21) Application number: 23461683.7

(22) Date of filing: **30.11.2023**

(51) International Patent Classification (IPC):
*G06N 10/20* (2022.01)

(52) Cooperative Patent Classification (CPC):
**G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Centrum Fizyki Teoretycznej Pan
02-668 Warszawa (PL)**

(72) Inventors:
• **McNulty, Dan
70122 Bari (IT)**
• **Majsak, Joanna
20-613 Lublin (PL)**
• **Calegari, Susane
00-144 Warszawa (PL)**
• **Oszmaniec, Michal
01-884 Warszawa (PL)**

(74) Representative: **AOMB Polska Sp. z.o.o.
ul. Rondo Ignacego Daszynskiego 1
00-843 Warsaw (PL)**

(54) **A METHOD, SYSTEM AND COMPUTER PROGRAM FOR IMPROVING THE PERFORMANCE OF ESTIMATION OF FERMIONIC OPERATORS ON A QUANTUM COMPUTER, BASED ON SIMULTANEOUS MEASUREMENT OF NOISY MAJORANA OBSERVABLES**

(57) The present invention relates to a method for estimating fermionic k-body reduced density matrices (where k=1,2) and expectation values of fermionic Hamiltonians on a quantum computer, comprising the steps of:
• step i) implementing a joint measurement of noisy versions of products of Majorana fermion operators,
• step ii) directly using estimates of expectation values of said products of Majorana fermion operators accessible from outputs in a post-processing of the results of the measurements performed in a computational basis on a quantum computer for estimating the fermionic k-body reduced density matrices and expectation values of fermionic Hamiltonians.

The invention covers also a system comprising a quantum computer and a classical computer, programmed and configured for implementing the method.

The invention covers also a computer program comprising instructions which, when the program is executed by the classical computer in the system according to invention, cause the system to carry out the method according to invention.

Fig. 1

EP 4 564 237 A1

**Description**

**Technical Field**

The present invention relates to a method for estimating expectation values of a fermionic operators of a quantum state implemented on a quantum computer.

**Background**

Quantum chemistry and quantum many-body physics is one of the most promising areas in which quantum computers can offer an advantage over classical computers in the near-term.

The basic idea is to encode states on a quantum system (which requires exponentially large memory to be even stored on a classical computer) in a moderate size quantum computer, whose size scales linearly with the size of the physical problem, and to use quantum gates to manipulate it. Such manipulations can be used to implement various algorithms important for understanding many physical problems such as finding ground or thermal states of a quantum many body system, assessment of correlations and other characteristics present in this states - such as k-body fermionic reduced density matrices (for fermionic systems). Such data can be extremely useful for many applications such as material sciences (designing new materials with desired properties), quantum chemistry or drug industry. However, in order to carry out such algorithms (Variational Quantum Eigensolver is one of the examples) require estimation of multiple operators that in general cannot be measured jointly on a quantum computer.

One of the bottlenecks that limits the practical usefulness of the above-mentioned algorithms is therefore the cost of measurements that need to be implemented on a quantum computer in order to estimate the relevant operators. The cost can be quantified in terms of circuit complexity needed to realize measurements, number of measurement settings that need to be realized, as well as sampling complexity i.e. the number of times a quantum device needs to be queried in order to accurately carry out the estimation procedure.

The present state-of-art techniques for estimating non commuting observables on multiparticle quantum systems are compared and summarized below. The overall summary from comparison of different strategies is the following:

Accurate estimation of k-body fermionic reduced density matrices (there are $O(N^{2k})$ parameters that need to be estimated here) requires either (i) [Phys. Rev. Lett. 127, 110504 (2021)] complicated quantum circuits (with depth scaling linearly with system size -N ) which allow to estimate all k-body Fermionic reduced density matrices in time $N^k$ (this number refers to both number of circuits, as well as sample complexity), or (ii) [Phys. Rev. A 101, 062322 (2020)] simple quantum circuits (of constant depth) require $N^{2k}$ circuits to estimate k-body fermionic reduced density matrices.

In general, guarantees for sample complexity for estimation of a many body Hamiltonian are provided only for methods that require to perform large number of different large depth (N) quantum circuits.

US20180053112A1 discloses a technique that relates to reducing qubits required on a quantum computer. A Fermionic system is characterized in terms of a Hamiltonian. The Fermionic system includes Fermions and Fermionic modes with a total number of 2M Fermionic modes. The Hamiltonian has a parity symmetry encoded by spin up and spin down parity operators. Fermionic modes are sorted such that the first half of 2M modes corresponds to spin up and the second half of 2M modes corresponds to spin down. The Hamiltonian and the parity operators are transformed utilizing a Fermion to qubit mapping that transforms parity operators to a first single qubit Pauli operator on a qubit M and a second single qubit Pauli operator on a qubit 2M. The qubit M having been operated on by the first single qubit Pauli operator and the qubit 2M having been operated on by the second single qubit Pauli operator are removed.

US20230289637A1 discloses systems, computer-implemented methods, and computer program products to facilitate estimation of an expected energy value of a Hamiltonian based on data of the Hamiltonian, the quantum state produced by a quantum device and/or entangled measurements are provided. According to an embodiment, a system can comprise a memory that stores computer executable components and a processor that executes the computer executable components stored in the memory. The computer executable components can comprise a selection component that selects a quantum state measurement basis having a probability defined based on a ratio of a Pauli operator in a Hamiltonian of a quantum system. The computer executable components can further comprise a measurement component that captures a quantum state measurement of a qubit in the quantum system based on the quantum state measurement basis.

US11676056B2 discloses A method for calculating excited state properties of a molecular system using a hybrid classical-quantum computing system includes determining, using a quantum processor and memory, a ground state wavefunction of a combination of quantum logic gates. In an embodiment, the method includes forming a set of excitation operators. In an embodiment, the method includes forming a set of commutators from the set of excitation operators and a Hamiltonian operator. In an embodiment, the method includes mapping the set of commutators onto a set of qubit states, the set of qubit states corresponding to a set of qubits of the quantum processor. In an embodiment, the method includes evaluating, using the quantum processor and memory, the set of commutators. In an embodiment, the method includes causing a quantum readout circuit to measure an excited state energy from the set of computed commutators.

AU2023203460A1 discloses methods, systems and apparatus for simulating physical systems. In one aspect, a method includes the actions of selecting a first set of basis functions for the simulation, wherein the first set of basis functions comprises an active and a virtual set of orbitals; defining a set of expansion operators for the simulation, wherein expansion operators in the set of expansion operators approximate fermionic excitations in an active space spanned by the active set of orbitals and a virtual space spanned by the virtual set of orbitals; performing multiple quantum computations to determine a matrix representation of a Hamiltonian characterizing the system in a second set of basis functions, computing, using the determined matrix representation of the Hamiltonian, eigenvalues and eigenvectors of the Hamiltonian; and determining properties of the physical system using the computed eigenvalues and eigenvectors.

US10922617B2 discloses a method for generating a computing specification to be executed by a quantum processor includes: accepting a problem specification that corresponds to a second-quantized representation of a fermionic Hamiltonian, and transforming the fermionic Hamiltonian into a first qubit Hamiltonian including a first set of qubits that encode a fermionic state specified by occupancy of spin orbitals. An occupancy of any spin orbital is encoded in a number of qubits that is logarithmic in the number of spin orbitals, and a parity for a transition between any two spin orbitals is encoded in a number of qubits that is logarithmic in the number of spin orbitals. An eigenspectrum of a second qubit Hamiltonian, including the first set of qubits and a second set of qubit, includes a low-energy subspace and a high-energy subspace, and an eigenspectrum of the first qubit Hamiltonian is approximated by a set of low-energy eigenvalues of the low-energy subspace.

US20220188682A1 discloses techniques for mitigating readout error for quantum expectation are presented. Calibration component applies first random Pauli gates to qubits at first output of first circuit prior to first readout measurements of the qubits. Estimation component applies second random Pauli gates to qubits at second output of second circuit prior to second readout measurements of the qubits, and generates an error-mitigated readout determination based on first random Pauli gates applied to qubits at first circuit output and second random Pauli gates applied to qubits at second circuit output. Calibration component determines calibration data based on first readout measurements. Estimation component determines estimation data based on second readout measurements. Estimation component determines normalization scalar value based on the calibration data, determines estimation scalar value based on the estimation data, and determines the error-mitigated readout determination associated with a circuit of interest based on the normalization scalar value and estimation scalar value.

As explained above, the inventors of the present invention have found that state-of-the-art methods for estimating non-commuting properties of many-body Hamiltonians require high computing capacity due to the complication resulting from:

    1) large circuit depth;
    2) necessity of generation of many different circuits possessing high complexity;
    3) large sample (time) complexity.

The present invention has been made in view of the above problems, and an object of the present invention is a method for estimating many properties of fermionic quantum system via family of circuits whose depth scales linearly (N) in the system size (but in certain embodiments, like 2D qubit layout, exhibits scaling $\sqrt{N}$. The important feature of the scheme is that circuits differ between each other only by a simple modification, which amounts to applying an array of single qubit Pauli gates. At the same time sample complexity and number of circuits that need to be implemented are comparable, and sometimes superior to other state-of the art methods. A key feature of the invention is that estimation of k-body reduced fermionic density matrices (for k=1,2), as well as expectation value of a quantum Hamiltonian, is obtained by simultaneous measurement of noisy versions of Majorana fermion operators.

## Summary

The present patent application describes a novel method for efficient estimation of expectation values of fermionic observables on a general quantum state encoded on a quantum computer. The invention provides a way to estimate k-body fermionic reduced density matrices and quantum fermionic Hamiltonians, a task which incurs significant cost due to the necessary sampling overheads and complicated circuits that need to be executed on a quantum computer, i that are difficult to solve with classical computers. The method utilizes a single layer of gates implementing a transformation via product of Majorana - fermion operators, a unitary transformation belonging to a class of fermionic Gaussian transformations , measurement of the occupation numbers in Fermionic modes and post-processing of the results of the measurements performed in a computational basis on a quantum computer.

The invention has applications in a range of fields, including chemistry, materials science, drug discovery, and quantum simulation, where accurate estimation of properties of fermionic quantum systems is critical. The method enables the efficient solution of problems that previously required higher computing power for setting the system, thus representing a significant advancement in the field of quantum computing.

The patent application provides a detailed description of the method, including the underlying theory and the practical implementation on a quantum computing system. The patent claims encompass various embodiments of the invention, including the use of different gate sets and unitary transformations. The patent application also provides examples of the method applied to specific quantum systems (estimation of energy of exemplary molecular quantum Hamiltonians), demonstrating the comparable performance to state-of-the art methods, while requiring (asymptotically) smaller circuit depths and smaller number of complicated quantum transformations (requiring to entangle all the qubits)

Overall, the present invention represents a significant development in the field of quantum computing, allowing for effective estimation of expectation values of fermionic Hamiltonians.

According to the invention, the method for estimating fermionic k-body reduced density matrices (for k=1,2) and expectation values of fermionic Hamiltonians on a quantum computer, comprises the steps of:

- step i) implementing a joint measurement of noisy versions of products of Majorana fermion operators, as explained in the protocol given in Section III of the part "How to implement the invention"
- step ii) directly using estimates (from Equation 10 of the part "How to implement the invention") of expectation values of said noisy products of Majorana fermion operators accessible from outputs in a post-processing of the results of the measurements performed in a computational basis on a quantum computer for estimating the fermionic k-body reduced density matrices and expectation values of fermionic Hamiltonians.

A similar method was previously proposed to estimate expectation values of products of Pauli matrices in systems of distinguishable particles (qubits), in the publication: D. McNulty, F. B. Maciejewski, and M. Oszmaniec, Phys. Rev. Lett. 130, 100801 (2023).

Preferably in the present method, the implementation of the joint measurement of noisy versions of Majorana fermion operators (observables) in step i is realized by the following actions:

a) a unitary transformation realizing a randomly chosen product of the Majorana fermion operators,
b) one or more global Gaussian fermionic unitary transformation (realizing a suitable orthogonal transformation of Majorana modes),
c) implementing a measurement of the occupation number in different fermionic modes (computational basis) thereby obtaining a bitstring encoding of the output,

and afterwards performing a classical post-processing of the bitstring encoding of the output, based on the product of the Majorana operators of step a) and the global Gaussian fermionic unitary transformation of step b).

Preferably in the present method, the global Gaussian fermionic unitary transformation are chosen as:

- Gaussian unitaries realizing Haar random orthogonal transformations of Majorana modes, or
- Structured operations V of the form, $V = V_{sup}V_{pair}$, where

    ∘ $V_{sup}$ realizes a flat superposition of Majorana modes belonging to disjoint subsets $X_\alpha$ forming a partition of the set of all 2N Majorana Modes
    ∘ $V_{pair}$ realizes a permutation $\pi$ of Majorana modes constructed in a manner that ensures that every two subsets $X_\alpha$, $X_\beta$ over which a uniform superposition is generated by $V_{sup}$ are connected by the pairing $(\pi(2i-1), \pi(2i))$, for some $i$.

The detailed construction of subsets, and permutations and unitaries realizing flat superposition of Majorana modes are presented in Section III of the part "How to implement the invention". The construction of these objects for the problem of estimation of expectation value of molecular quantum chemistry Hamiltonian is presented in Section VI of the part How to implement the invention". Finally, implementation costs associated to different physical arrangements of qubits realizing the method are presented in Section V of the part "How to implement the invention".

Preferably in the present method, a pre-defined fermion-to-qubit mapping is used for encoding of the fermionic system into the quantum computer, consisting of distinguishable qubits, in which the Majorana fermion operators are encoded as strings of Pauli operators.

In such case, the joint measurement of noisy versions of products of Majorana fermion operators (observables) in step i is realized by the following actions:

a) implementing a single layer of randomly chosen Pauli gates,
b) implementing of one or more global Gaussian fermionic unitary transformation encoded into a sequence of two-qubit quantum gates realized on the quantum computer, specific to the fermion-to-qubit mapping,

c) implementing said measurement in a computational basis thereby obtaining a bitstring encoding of the output,

and afterwards performing a classical post-processing of the bitstring encoding of the output, based on (effective realization of the measurement of) the product of the Majorana operators of step a) and the global Gaussian fermionic unitary transformation of step b).

Preferably, fermion-to qubit mapping is realized on a rectangular arrangement of qubits realizing a Jordan Wigner transformation and four Gaussian fermionic unitaries, as explained in Section VI of the part "How to realize the invention", which are used to implement the estimation of expectation value of the fermionic quantum Hamiltonian.

The present invention covers also a system comprising a quantum computer and a classical computer, programmed and configured for implementing the inventive method as described above.

The present invention covers also a computer program comprising instructions which, when the program is executed by the classical computer in the system as above, cause the system to carry out the inventive method as described above.

Said classical post-processing of the bitstring encoding of the output is described in more details in the Section III of "How to implement the invention", further in this application.

The present invention is applicable to quantum many-body systems, quantum chemistry etc. In systems as dealt with in the present application, the number of physical quantities to be measured grows as the $4^{th}$ power (N^4) with the size of the system (number of fermionic modes N). It is important to read relevant information on the output of the quantum computer, wherein the initial state of said quantum computer reflected the problem to be solved. The present invention provides quality comparable with prior art solutions, but at the same time remarkably reduces the "cost", understood as computational complexity (number of operations to be performed and time needed for them). Furthermore, the number of different high-depth circuits that have to be implemented is constant, which make our scheme appealing due to reduced cost associated with having to compile different unitaries on a given hardware (the necessity to reconfigure complicated quantum circuits, originating for example from the limited memory of FPGAs controlling quantum system, is one of the bottlenecks in present-day quantum computers)

Therefore, the present invention has the following features:

- Random single-shot implementation of Pauli gates (on each qubit independently) - always.
- Only a few (up to 9) global Gaussian unitary transformations are needed to estimate fermionic k-RDMs for k=1,2 - in contrast to state-of the art when many different ($N^k$) unitaries are needed.

The details of this construction are given in Section IV of the part "How to implement the invention". This is exceptional for our method and offer an improvement over state of the art.

- Global Fermionic Gaussian unitary - (on fermionic level) -depth ~N (and ~N^2 gates) in standard Jordan-Wigner encoding & "standard" (1D, 2D) layouts. The details of this construction are given in Section V of the part "How to implement the invention".

Specific Fermionic Gaussian unitary/unitaries in the inventive method - in general ( depth ~N (and ~N^(3/2) gates) in standard fermion-to-qubit encodings & "standard" (1D, and some 2D) layouts but for Jordan-Wigner encoding (the most popular) on the rectangular grid we get ~Sqrt(N) - this is exceptional for our method and offer an improvement over state of the art. The details of this construction are given in Section V of the part "How to implement the invention". Furthermore, specific circuits suitable for estimating expectation values of fermionic Hamiltonians are presented in Section VI of the part "How to implement the invention".

**Brief Description of the Drawings**

Preferred embodiments of the present invention are presented in a more detailed way with reference to the attached drawing, in which:

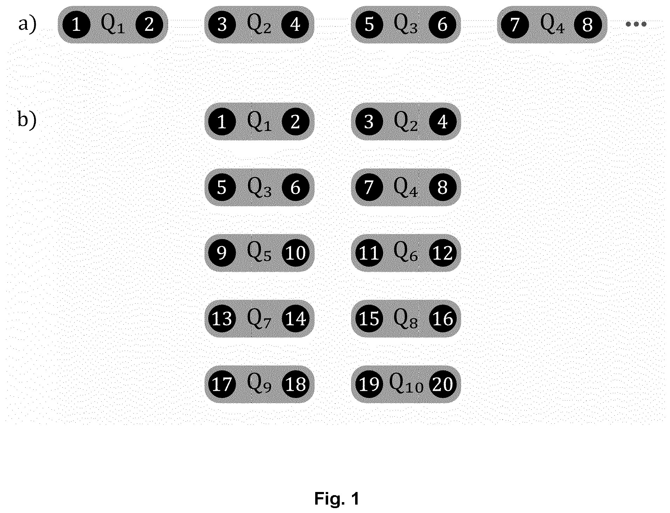

Fig. 1 presents two exemplary realizations of the Jordan-Wigner encoding in two systems of qubits that exhibit different spatial locality: a) 1D array and b) $(L + 1) \times L$ rectangular qubit array (for L=4). The individual qubits are indicated by consecutive pairs within the dark blue cigar-shaped markings labelled by $Q_1$, $Q_2$,, each enclosing two Majorana mode operators. The different labellings of Majorana modes reflects different physical arrangements of qubits. Importantly, locality in Majorana modes (e.g. coupling $\exp(i\varphi\gamma_{i,j})$, for neighbouring Majorana modes i,j) does not in general correspond to locality with respect to the structure of the lattice;

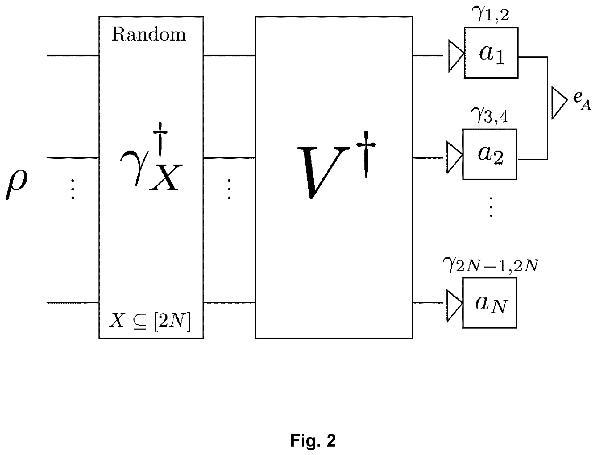

Fig. 2 presents circuit implementation of the joint measurement scheme described in (i)--(iv) for an N mode fermionic state. In step (i) the state evolves under the action of a Majorana monomial $\gamma_X^\dagger$, sampled uniformly at random from the set of $2^{2N}$ Majorana monomials. In step (ii) a fermionic Gaussian unitary $V^\dagger$ is applied. In step (iii) the N projective measurements of the disjoint Majorana pairs are performed, with outcomes $a_1, ..., a_N$. Finally, for a given $A \subset [2N]$, one outputs $e_A$ according to step (iv);

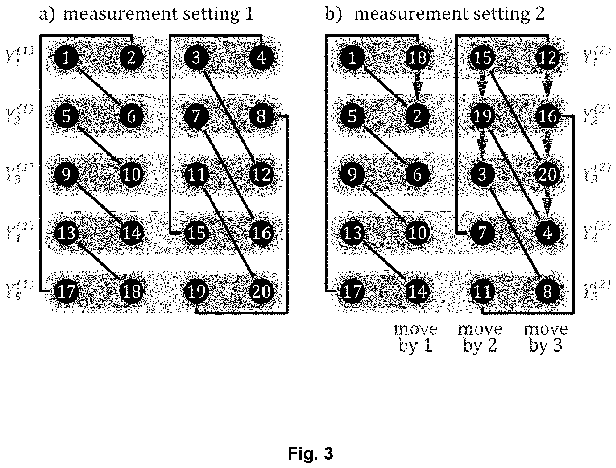

Fig. 3 presents The $2N = 20$ Majorana operators partitioned into 5 subsets (rows) $Y_\alpha^{(r)}$ of cardinality 4, for each measurement round r=1,2. The unitary $V_{\text{sup}}^{(r)}$ acts via a flat orthogonal matrix on each row $Y_\alpha^{(r)}$, transforming every $\gamma_k$, $k \in Y$, into a balanced superposition $\tilde{\gamma}_k = \sum_{l \in Y_\alpha} b_{lk}^{(\alpha)} \gamma_l$, with $b_{lk}^{(\alpha)} = \Omega\left(N^{-1/4}\right)$. In the first measurement round, the pairings $(\pi(2j - 1), \pi(2j))$ (marked by solid black lines) are constructed by permuting the standard pairings $\{(2j - 1, 2j)\}_{j=1}^N$ (see Fig. 1) with a permutation $\pi$ that shifts the second and fourth columns cyclically by 1 and 2 respectively. These pairings ensure the sample from a noisy variant of $\gamma_{ij}$ can be obtained if i and j are in different rows. In the second measurement setting, the partition is defined by applying permutation $\sigma^{(2)}$, that shifts the operators in columns 2,3,4 (of setting 1) vertically downwards by 1,2,3 rows, respectively. All operators in the same row of setting 1 now appear in different rows of setting 2, ensuring joint measurability of all Majorana pairs and

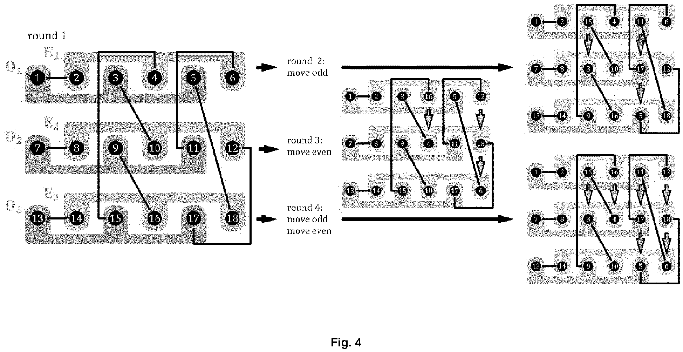

Fig. 4 presents a schematic representation of the construction of the 4 rounds of our measurement strategy for physical fermionic Hamiltonians from Sec. VI. The 2N Majorana modes are arranged on an $L \times 2L$ grid and partitioned into L even ($E_i$) and L odd ($O_i$) subsets (clusters) of cardinality L. The unitary $V_{\text{sup}}^{(r)}$ acts via a flat orthogonal matrix on each cluster $O_i$ and $E_i$, for example, transforming every $\gamma_k$, $k \in E_i$, into a balanced superposition $\tilde{\gamma}_k = \sum_{l \in E_i} b_{lk}^{(i)} \gamma_l$, with $b_{lk}^{(i)} = \Omega\left(N^{-1/4}\right)$. In round 1, the pairings $(\pi(2j - 1), \pi(2j))$ (marked by solid black lines) which define $V_{pair}$ are constructed by permuting the standard pairings $\{(2j - 1, 2j)\}_{j=1}^N$ with a permutation $\pi$ that shifts the second and third even column cyclically by 1 and 2 respectively (in a manner analogous to Fig. 3). Importantly, the black pairings ensure each even cluster is coupled to each odd cluster. In rounds $r = 2,3,4$, the partition of the modes into even and odd clusters are defined by the permutations $\sigma^{(r)}$ which act to give $\sigma^{(r)}(E_i) = E_i^{(r)}$ and $\sigma^{(r)}(O_i) = O_i^{(r)}$. The permutation $\sigma^{(2)}$ is realized by a vertical cyclical shift of the second and third odd columns of the first measurement setting by 1 and 2, respectively (top right). Similarly, $\sigma^{(3)}$ corresponds to a vertical cyclical shift of the second and third even columns of the first measurement (middle). Finally, $\sigma^{(4)}$ is realized by performing all of the vertical shifts defined previously (bottom right).

## How to implement the invention

### I. Introduction

One of the most promising tasks in which quantum computers offer exponential speedups over their classical counterparts is the problem of determining low energy states of molecular Hamiltonians in quantum chemistry (cf. [Bauer2022] for a review). The ability to simulate quantum systems on a quantum computer could lead to more accurate ground state energy approximations compared to the best known classical algorithms. As these simulations rely on a (yet to be realized) universal quantum computer, a reasonable strategy in the meantime is to find problems that near-term (noisy) quantum devices can outperform current classical approaches.

To this end, much effort has been spent developing algorithms to run on intermediate scale quantum devices that combine both quantum and classical techniques to achieve speedups [Bharti2022,Preskill2018]. A large class of these algorithms encode the problem in a Hamiltonian, with the solution requiring an approximation of the ground state energy. The hybrid nature of these algorithms involve estimating the Hamiltonian on a quantum device and optimizing the prepared state by classical methods.

As the system size increases, one of the main performance bottlenecks in estimating the Hamiltonian efficiently is the inability to simultaneously measure the non-commuting observables in the Hamiltonian's decomposition. To reduce the measurement cost (and state preparations) several strategies have been developed. A significant body of work attempts to efficiently find minimal groupings of the measurements into sub-classes of commuting observables, with each commuting class measured separately [Jena2019,Gokhale2019,Yen2020].

Another approach, known as classical shadows, is based on a randomized measurement strategy, reducing the measurement cost by constructing a classical approximation of the quantum state to simultaneously estimate the observables [Huang20]. This scheme applies to various classes of measurements [Hadfield20,Hu22], including fermionic observables [Zhao2021,Wan2023,Low2022]. The fermionic (or matchgate) classical shadow protocol offers state-of-the-art sample complexity scalings for estimating expectations of products of Majorana operators for an N mode fermionic system. However, the protocol is implemented via circuits of depth $\mathcal{O}(N)$ and requires a large number of distinct circuits, both of which are practically demanding.

In this work we consider an alternative approach to estimate non-commuting fermionic observables by implementing a simple and efficient joint measurement, analogous to the strategy for estimating many-body qubit Hamiltonians taken in [Mcnulty2023a]. In particular, we construct a joint measurement of a modified (noisy) collection of Majorana monomials, whose outcome statistics can be reproduced from the (parent) measurement together with an efficient classical post-processing [Busch1989,Heinosaari2008]. After a simple classical post-processing we can obtain, for any unknown state, estimators of expectation values for fermionic observables and Hamiltonians consisting of linear combinations of Majorana monomials.

The general measurement scheme for an N mode fermionic system involves sampling from two distinct subsets of unitaries followed by a measurement of the occupation numbers and a simple classical post-processing. Of the unitaries involved, the first subset resizes the Majorana operators while the second subset (which consists of K fermionic Gaussian unitaries) rotates blocks of the operators into balanced superpositions. For the case of quadratic and quartic Majorana monomials we show that at most K=2,8 fermionic Gaussian unitaries are required, respectively, to jointly measure all noisy versions of the desired observables. We also describe a tailored joint measurement scheme for estimating energies of electronic structure Hamiltonians decomposed of quadratic and quartic terms---implemented with K=4 fermionic Gaussian unitaries---by exploiting a linear term reduction with respect to the number of orbitals [Zhao2020].

For quadratic and quartic Majorana monomials, our joint measurement strategy estimates expectation values to \epsilon precision with $\mathcal{O}(N/\epsilon^2)$ and $\mathcal{O}(N^2/\epsilon^2)$ measurement rounds, respectively, providing the same performance guarantees as fermionic (matchgate) classical shadows [Zhao2021,Wan2023]. Under the Jordan-Wigner transformation, in the setting of a rectangular lattice, the measurement circuit can be achieved with depth $\mathcal{O}(\sqrt{N})$ and using $\mathcal{O}(N^{3/2})$ two-qubit gates. Fermionic and matchgate classical shadow circuits, on the other hand, require depth $\mathcal{O}(N)$ and $\mathcal{O}(N^2)$ two-qubit gates, while also requiring a randomisation over large collections of unitaries [Zhao2021,Wan2023]. Finally, we benchmark our strategy with several popular molecular Hamiltonians and find that its performance, in terms of the sample complexity, is similar to other state-of-the-art schemes.

## II. Setting and Notation

We will be interested in systems describing N-mode fermionic systems. The Hilbert space describing the system is an N mode fermionic Fock space $\mathcal{H}_N = \text{Fock}_f(\mathbb{C}^N)$ which is a $2^N$ dimensional space spanned by Fock states $|\mathbf{n}\rangle = |n_1, ..., n_N\rangle$, where $n_i \in \{0,1\}$ are occupation numbers of fermionic particles in N fermionic modes (the modes are chosen by the choice of the basis $\{|i\rangle\}_{i=1}^N$ of single-particle Hilbert space $\mathbb{C}^N$). In $\mathcal{H}_N$ we have a natural action of fermionic creation and annihilation operators $c_i^\dagger$, $c_i$, $i$ = 1, ..., N, satisfying the canonical anticommutation relations:

$$\{c_i, c_j\} = \{c_i^\dagger, c_j^\dagger\} = 0, \{c_i, c_j^\dagger\} = \delta_{ij}$$

It is also convenient to introduce Majorana fermion operators $\{\gamma_i\}_{i=1}^{2N}$, which are fermionic analogues of quadratures known from quantum optics $\gamma_{2i-1} = c_i + c_i^\dagger, \gamma_{2i} = i(c_i^\dagger - c_i)$. Majorana operators are Hermitian and satisfy the anticommutation relations $\{\gamma_i, \gamma_j\} = \delta_{ij}\mathbb{I}$, where $\mathbb{I}$ is the identity operator on $\mathcal{H}_N$. In this work we are interested in estimating expectation values of (Hermitian) products of Majorana operators, with particular emphasis of monomials of degree two and four. For an even-sized subset $A \subset [2N]$ (we use the convention $[k] = \{1, ..., k\}$) we define:

$$\gamma_A := i^{|A|/2} \prod_{i \in A} \gamma_i$$, where $|A|$ denotes the size of the subset A. We assume the convention that terms in the product are arranged in a non-increasing manner, for example $\gamma_{1,3} = i\gamma_1\gamma_3$ and $\gamma_{1,3,6,11} = -\gamma_1\gamma_3\gamma_6\gamma_{11}$. Majorana monomials satisfy the following commutation relation $\gamma_A\gamma_B = (-1)^{|A|\cdot|B|+|A\cap B|}\gamma_B\gamma_A$ and in general do not commute. For this reason it is impossible to jointly measure all products of Majorana fermion observables.

In quantum theory, a general measurement is described as a collection M = $\{M_a\}$ of operators satisfying $M_a \geq 0$ and $\sum_a M_a = \mathbb{I}$. In a given experimental run, the probability of obtaining an outcome a from a measurement on the state $\rho$ is given by p(a|M, $\rho$) = Tr($M_a\rho$) (Born rule). An essential component of our measurement strategy is the POVM describing the joint measurement of N disjoint (and commuting) Majorana pair operators, namely

$$M_{a_1,a_2,...,a_N} = \prod_{i=1}^{N} \frac{1}{2}\left(\mathbb{I} + a_i \cdot \gamma_{2i-1,2i}\right). \qquad (1)$$

In the above expression, the values $a_i \in \{\pm 1\}$, $i = 1, ..., N$, are the outcomes of the jointly measured (commuting) quadratic Majorana observables $\gamma_{2i-1,2i}$. Alternatively we can view $\{M_{a_1,...,a_N}\}$, up to a simple transformation of outcomes ($a_i \mapsto n_i = (1 + a_i)/2$), as a measurement of occupation numbers $n_i$ in N fermionic modes. Another important element of our strategy will be the class of so-called fermionic Gaussian unitaries, also known under the name of fermionic linear optics.. Unitaries V that belong to this class, which in what follows we will denote by FLO(N), satisfy:

$$V\gamma_i V^\dagger = \widetilde{\gamma}_i = \sum_{j=1}^{2N} R_{ji}\gamma_j, \qquad (2)$$

where $i = 1, ..., 2N$ and $R_{ji}$ are the matrix elements of $R \in O(2N)$ (denoting O(2N) as the group of $2N \times 2N$ orthogonal matrices). Conversely, for every $R \in O(2N)$ it is possible to find $V \in$ FLO for which Eq. (2) holds. For $R \in O(2N)$, the corresponding $V_R \in$ FLO(N) is defined up to a physically irrelevant global phase. From Eq. (2) it follows that $V_{R_1}V_{R_2} = V_{R_1R_2}$ (up to a global phase). The FLO transformations modify higher degree Majorana monomials in the following way:

$$V\gamma_A V^\dagger = \sum_{B\subset[2N], |B|=|A|} \det\left(R_{B,A}\right)\gamma_B, \qquad (3)$$

where $R_{BA}$ is an $|A| \times |A|$ submatrix of R obtained by choosing rows and columns of R according to subsets B and A respectively (and arranging them in increasing fashion).

Utilizing these ingredients, our aim is to present a measurement scheme, described by a single (parent) POVM, that jointly measures noisy variants of all non-commuting Majorana observables. In particular, we describe a parent POVM together with classical post-processing such that, for any $A \subset [2n]$, we can *simultaneously* reproduce the outcomes statistics of $M^{A,\eta_A}$, where

$$M_a^{A,\eta_A} = \frac{1}{2}\left(\mathbb{I} + a \cdot \eta_A\gamma_A\right), \qquad (4)$$

with $\eta_A \in [0,1]$ the visibility and $a \in \{\pm 1\}$ the measurement outcome. Ideally, the visibility for each A will be sufficiently large due to its inverse controlling the sample complexity of our estimation scheme.

It is often convenient to represent a fermionic system as a system of qubits via a fermion-to-qubit mapping. A transformation of this type maps the 2N Majorana operators to multi-qubit Pauli operators while preserving their anti-commutativity relations. One such mapping is the Jordan-Wigner (JW) transformation in which the Majorana operators of mode $j \in [N]$ are represented as the N-qubit Pauli operators,

$$\gamma_{2j-1} = Z^{\otimes j-1} \otimes X \otimes I_2^{\otimes n-j}$$

and

$$\gamma_{2j} = Z^{\otimes j-1} \otimes Y \otimes I_2^{\otimes n-j},$$

where X, Y and Z are the qubit Pauli operators, and $I_2$ the $2 \times 2$ identity. While the Jordan-Wigner transformation can be defined irrespective of the physical arrangement of qubits, different layouts (and labellings of qubits) can have benefits from an implementation perspective in terms of the feasibility of a physical realization (see Fig. 1 for exemplary realizations of Jordan-Wigner transformation in 1D and 2D layouts).

For a random variable y we denote by $\mathrm{Pr}_y(\mathcal{Y})$ the probability of event $\mathcal{Y}$ occurring. For a real-valued function f of a random variable y, we will denote by $\mathbb{E}_y f$ the expectation value of the random variable $f(y)$. Finally, for two positive-valued functions $f(x)$, $g(x)$ we will write $f = \mathcal{O}(g)$ if there exists a positive constant C such that $f(x) \le C \cdot g(x)$, for sufficiently large x. We will write $f = \Omega(g)$ if $g = \mathcal{O}(f)$ and finally $f = \Theta(g)$ if $f = \mathcal{O}(g)$ and $g = \mathcal{O}(f)$.

### III. A General Joint Measurement Strategy

We now present a general strategy to simultaneously measure noisy versions of all Majorana fermion observables $\gamma_A$, with |A| even, on an unknown fermionic state $\rho$. First, fix a suitably chosen $V \in \mathrm{FLO}(N)$ corresponding to $R \in O(2N)$. Let $B' \subset [N]$ label a subset of the N commuting Majorana pairs which form the POVM M in Eq. (1), with cardinality $|B'| = |A|/2$. Set $B = \cup_{i \in EB'} \{2i - 1, 2i\}$, $s_{AB} = \mathrm{sgn}(\det(R_{AB}))$.

A single round of the measurement scheme is described as follows:

(i) Draw $X \subset [2N]$ according to a uniform distribution on all $2^{2N}$ subsets of [2N], Apply $\gamma_X^\dagger$ to $\rho$, obtaining

$$\rho' = \gamma_X^\dagger \rho \gamma_X.$$

(ii) Apply $V^\dagger$ to $\rho'$, obtaining $\rho'' = V^\dagger \gamma_X^\dagger \rho \gamma_X V$.

(iii) Measure on $\rho''$ simultaneously commuting Majorana pair operators $\gamma_{1,2}, \gamma_{3,4}, \ldots, \gamma_{2N-1,2N}$, obtaining outcomes $a = (a_1, a_2, \ldots, a_N)(a_i = \pm 1)$.

(iv) Output $e_A = s_{AB}(-1)^{|A \cap X|} \Pi_{j \in B'} a_i$.

Proposition 1. *For all* $A \subset [2N]$, |A|--even, *the above procedure generates samples* $e_A$ *from a measurement* $M^{A, \eta A}$ *(a noisy variant of the projective measurement of the dichotomic observable* $\gamma_A$, *cf. Eq. (4)) conducted on state* $\rho$, *with visibility* $\eta_A = |\det(R_{AB})|$.

*Proof.* We first note that

$$\gamma_X V \gamma_B V^\dagger \gamma_X^\dagger = \sum_{Y \subset [2N], |Y| = |B|} \det(R_{Y,B})(-1)^{|X \cap Y|} \gamma_Y, \qquad (5)$$

where we have used Eq. (3) and the commutation relation of the operators $\gamma_X$, $\gamma_Y$. In order to prove the claim in the proposition it suffices to show that for x=\pm 1 we have

$$\Pr{}_{X,a}(e_A = x) = \mathsf{Tr}\left(\rho \frac{1}{2}(\mathbb{I} + x \cdot \eta_A \gamma_A)\right)$$

, where X and **a** are random variables on which $e_A$ depends. Using the definition of $e_A$ in (iv) and the fact that the distribution of X is uniform we have

$$\Pr{}_{X,a}(e_A = x) = \Pr{}_{X,a}\left(\prod_{i \in B'} a_i = x s_{AB}(-1)^{|A \cap X|}\right) \qquad (6)$$

$$= \frac{1}{2^{2N}} \sum_{X \subset [2N]} \mathsf{Tr}\left(\rho'' \frac{1}{2}\left(\mathbb{I} + x s_{AB}(-1)^{|A \cap X|} \gamma_B\right)\right), \qquad (7)$$

where we have used the fact that $a_{B'} = \Pi_{i \in B'} a_i$ obtained form step (iii) realizes the projective measurement of $\Pi_{i \in B'} \gamma_{2i-1,2i} = \gamma_B$. By using the definition of \rho" and applying the unitary $\gamma_X V$ to the POVM element in Eq. (7) we obtain that $\Pr_{X,a}(e_A = x)$ equals

$$\frac{1}{2^{2N+1}} \sum_{X \subset [2N]} \mathsf{Tr}\left(\rho\left(\mathbb{I} + x s_{AB}(-1)^{|A \cap X|} \gamma_X V \gamma_B V^\dagger \gamma_X^\dagger\right)\right). \qquad (8)$$

Utilizing (5) we get that the part of the above expression proportional to variable x equals

$$\frac{s_{AB}}{2^{2N+1}} \sum_{X,Y \subset [2N], |Y|=|B|} \mathsf{Tr}\left(\rho(-1)^{|A \cap X|+|X \cap Y|} \gamma_Y \det(R_{Y,B})\right)$$

$$= \frac{1}{2} \eta_A \backslash tr(\rho \gamma_A),$$

where we have used that for |A|,|B|- even:

$$\sum_{X,Y \subset [2N], |Y|=|B|} (-1)^{|A \cap X|+|X \cap Y|} = 2^{2N} \delta_{A,Y}$$

□

Note that steps (i)--(iii) above are independent on observable $\gamma_A$ whose noisy variant we aim to measure. In step (iv) we conduct an efficient post-processing that depends only on A, B' (which can depend on A) and a randomly chosen subset X. For this reason the POVM realized in steps (i)--(iii) is a parent POVM for noisy versions of observables $\gamma_A$ with visibility parameter $\eta_A$, for all subsets $A \subset [2N]$ of even size. Following the methodology presented in [Mcnulty2023a] we can use this to construct estimators of expectation values of $\gamma_A$ on a (unknown) state $\rho$, which take the form (we implicitly assume that $\eta\_A = |\det(R_{AB})| \neq 0$ :

$$\widehat{\gamma_A} := \frac{1}{\eta_A} e_A. \qquad (10)$$

The fact that this is an unbiased estimator follows from the simple observation that $\mathbb{E}_{a,X} e_A = \eta_A \mathsf{Tr}(\rho \gamma_A)$. Note that our approach can simultaneously estimate many non-commuting operators, just as in the case of classical shadows [Zhao2021, Wan2023, Huang2020].
To judge the efficiency of our measurement strategy for estimating the observables

$$\mathcal{S}_k = \{\gamma_A : |A| = k\}$$

in Sec. 4. for k=2,4, we calculate the number of copies of the state \rho (i.e. the sample complexity S) such that for all A with probability at least $1 - \delta$ we have $\left|\mathrm{Tr}(\gamma_A \rho) - \widehat{\gamma_{A,S}}\right| < \epsilon$, where $\widehat{\gamma_{A,S}} = (1/S)\sum_{i=1}^{S} \gamma_A^{(i)}$ is the empirical mean of the estimator $\widehat{\gamma_A}$ from S independent rounds. Since our estimator $\widehat{\gamma_A}$ is binary and takes the values $\{\pm \eta_A^{-1}\}$, Hoeffding's inequality yields for every observable $\gamma_A$,

$$\mathrm{Pr}\left(\left|\mathrm{Tr}[\gamma_A \rho] - \widehat{\gamma_{A,S}}\right| < \epsilon\right) > 1 - 2e^{-S(\epsilon \eta_A)^2/2} , \qquad (11)$$

Let

$$|\mathcal{S}_k|$$

be the number of estimated observables and $\eta_k$ the visibility for which all observables (of a given type) can be jointly measured. Following a simple reasoning based on the union bound (over different observables $\gamma_A$), we get

$$S = \frac{2}{\eta_k^2 \epsilon^2} \log(2|\mathcal{S}_k|/\delta) . \qquad (12)$$

### IV. Gaussian unitaries for measurements of Majorana pairs and quadruples

Here we sketch the construction of unitaries $V \in \mathrm{FLO}(N)$ that ensure that a joint measurement from Proposition 1 (or rather its simple modification) gives visibilities $\eta_2 = \mathcal{O}\left(1/\sqrt{N}\right)$ and $\eta_4 = \mathcal{O}(1/N)$, where $\eta_k$ denotes the maximum visibility for which *all* k--th degree Majorana monomials can be jointly measured by the parent.

We propose to use a unitary of the form $V = V_{\mathrm{sup}} V_{\mathrm{pair}}$, where $V_{\mathrm{pair}}$ corresponds to a permutation $R_\pi \in O(2N)$ and $V_{sup}$ realizes a *balanced superposition* of Majorana modes belonging to disjoint subsets $Y_\alpha$ that form a partition of the set of Majorana modes [2N] such that $\cup_{\alpha=1}^{L} Y_\alpha = [2N]$. We will abuse the notation and denote by $Y_\alpha$ subspaces spanned by vectors $\{|i\rangle\}_{i \in Y_\alpha}$. In the rest of this section we focus on a specific case in which $2N = L(L+1)$ and the collection of Majorana modes in divided into L subsets $\{Y_\alpha\}_{\alpha=1}^{L}$, each with cardinality $|Y_\alpha| = L + 1$. If this relation is not satisfied, it is possible to either add $2N_{\mathrm{aux}} \leq 2N$ auxiliary Majorana modes to embed a smaller fermionic system into a larger one, or to drop the restriction that all $Y_\alpha$'s have the same size.

The role of $V_{\mathrm{pair}}$ is to effectively realize a different pairing of the Majorana modes during the measurement process, in the sense that

$$\widetilde{M}_{a_1,\dots,a_N} = V_{\mathrm{pair}} M_{a_1,\dots,a_N} V_{\mathrm{pair}}^\dagger = \prod_{i=1}^{N} \frac{1}{2}\left(\mathbb{I} + a_i \gamma_{\pi(2i-1),\pi(2i)}\right) . \qquad (13)$$

An essential part the construction is to ensure each pairing $(\pi(2i-1), \pi(2i))$ connects two distinct subsets of Majorana modes, i.e. $\pi(2i-1) \in Y_\alpha$ and $\pi(2i) \in Y_\beta$, such that every pair of subsets is connected once. See Fig. 3 for an examples of a pairings and divisions into disjoint subsets for 2N=20. Finally, the orthogonal transformation behind $V_{sup}$ is of the form

$$R_{\mathrm{sup}} = \bigoplus_{\alpha=1}^{L} R^{(\alpha)} , \qquad (14)$$

where $R^{(\alpha)}$ are operators acting on spaces $Y_\alpha$ constructed from $(L+1) \times (L+1)$ lower-flat orthogonal matrices (which exist in every dimension with matrix elements satisfying $R_{ij}^{(\alpha)} = \Omega(1/\sqrt{L+1}) = \Omega(1/N^{1/4})$ for $i,j \in Y_\alpha$, and $R_{ij}^{(\alpha)} = 0$ otherwise.

By directly repeating steps in the proof of Proposition 1 for V of the above form, we observe that every Majorana pair $\gamma_{ij}$, with indices i,j belonging to different subsets: $i \in Y_{\alpha_i}$, $j \in Y_{\alpha_j}$, can be jointly measured with visibility $\eta_{ij} = \left| R_{ki}^{(\alpha_i)} R_{lj}^{(\alpha_j)} \right|$, where (k, l) is the pairing between subsets $Y_{\alpha_i}$ and $Y_{\alpha_j}$ (note that by construction $l \in Y_{\alpha_i}$ and $k \in Y_{\alpha_j}$. Using the flatness property of the rotations R^{(\alpha)}, we get $\eta_{ij} = \mathcal{O}(1/\sqrt{N})$. By repeating analogous reasoning, a four-element subset A = {ijkl} together with the same unitary and pairings described above, results in $\eta_A = \mathcal{O}(1/N)$, as long as the individual elements i,j,k,l belong to different subsets $Y_\alpha$.

In general not all pairs and quadruples will consists of elements belonging to different subsets $Y_\alpha$. To circumvent this problem we introduce additional FLO transformations $V^{(r)}$ in K distinct measurement settings indexed by r, that also take the form $V^{(r)} = V_{\text{sup}}^{(r)} V_{\text{pair}}^{(r)}$, each defined by a different permutation $\pi^{(r)}$ and a different partition $\{Y_\alpha^{(r)}\}_{\alpha=1}^L$ into disjoint subsets of the 2N Majorana modes. We denote by $\mathcal{M}^{(r)}$ the set of Majorana pairs and quadruples that are consistent with the partition structure inherent to a given unitary $V_{\text{sup}}^{(r)}$, i.e. the observables whose index set A contains elements only from distinct partition subsets.

We propose a modification of the original scheme by introducing a preliminary step (o) in which every experimental run is preceded by sampling $V^{(r)}$ uniformly at random from K possibilities: $V^{(1)}, ... , V^{(K)}$. Then, we proceed with the usual steps (i)-(iii) as described in Sec. III. If

$$\gamma_A \in \mathcal{M}^{(r)}$$

we continue to step (iv), otherwise we perform (iv') by sampling the outcome $e_A \in \{\pm 1\}$ at random with equal probability. This modification realizes a joint measurement of all pairs and quadruples with visibilities $\eta_{ij} \geq (1/K_2)\bar{\eta}_{ij}$ and $\eta_{ijkl} \geq (1/K_4)\bar{\eta}_{ijkl}$, where $\bar{\eta}_A$ is the visibility attainable from the unitary whose partition is compatible with A, and $K_2$, $K_4$ are the numbers of measurement settings that ensure all pairs and quadruples are compatible with at least one measurement round, respectively. In Fig. 3 we give an example of two measurement settings (K_2=2) that ensure all pairs are measured for 2N=L(L+1) Majorana modes arranged in a rectangular layout (with L--even). It can also be shown that when L+1 is a prime number, all Majorana quadruples can be measured using $K_4^{\text{prime}} = 7$ settings via a method that is compatible with the original layout and can be obtained by permuting Majorana modes in columns of the Majorana fermion arrangement from Fig. 3 (part a) (see Appendix B for the proof). For general L, a probabilistic reasoning ensures that $K_4 = 9$ random divisions of $2N = L(L + 1)$ into subsets of size L (not necessarily compatible with the 2D layout) suffice to measure all quadruples. Furthermore, we can extend this to arbitrary N mode systems by relaxing the constraint that the subsets are equally sized.

Proposition 2. *The randomized version of the measurement protocol defined in Sec. III with* at most *9 different FLO unitaries* $V^{(1)}, ..., V^{(9)}$ *jointly measures the noisy variants* M^{A,ηA} *for all Majorana pairs and quadruples with* $\eta_A = \mathcal{O}(1/\sqrt{N})$ *(for |A|=2) and* $\eta_A = \mathcal{O}(1/N)$ *(for |A|=4).*

The above result, taken together with Eq. (12) and using that there are

$$|\mathcal{S}_2| =$$

$\binom{2N}{2} = \mathcal{O}(N^2)$ Majorana pairs and Majorana quadruples, shows

$$|\mathcal{S}_4| = \binom{2N}{4} = \mathcal{O}(N^4)$$

the claimed sample complexity.

We conclude this section by analyzing how to relate unitaries realizing different measurement settings $V^{(r)} = V_{\text{sup}}^{(r)} V_{\text{pair}}^{(r)}$ to the ones implementing the "original" setting $V^{(1)} = V_{\text{sup}}^{(1)} V_{\text{pair}}^{(1)}$ (in what follows we will use the notation $V = V^{(1)}$, $V_{\text{sup}} = V_{\text{sup}}^{(1)}$, $V_{\text{pair}} = V_{\text{pair}}^{(1)}$). The subsequent measurement settings can be obtained by permuting Majorana modes in the original setting by a permutation $\sigma^{(r)}$ in such a way that for every \alpha, $\sigma^{(r)}(Y_\alpha) = Y_\alpha^{(r)}$ (this is how the second measurement round is obtained from the first one in Fig. 3, part 2). We remark that the choice of the permutation $\sigma^{(r)}$ is not unique. Now let $V_{\text{resh}}^{(r)}$ be a FLO unitary that realizes a real orthogonal transformation $R_{\sigma^{(r)}}$ encoding a permutation $\sigma^{(r)}$ defined above. It can be checked that the following relations hold (as a consequences of the relation $V_{R_1} V_{R_2} = V_{R_1 R_2}$, valid for all $R_i \in O(2N)$):

$$V_{\text{sup}}^{(r)} = V_{\text{resh}}^{(r)} V_{\text{sup}} \left( V_{\text{resh}}^{(r)} \right)^{\dagger}, V_{\text{pair}}^{(r)} = V_{\text{resh}}^{(r)} V_{\text{pair}}$$ . Consequently, we have

$$V^{(r)} = V_{\text{resh}}^{(r)} V_{\text{sup}} V_{\text{pair}} . \qquad (15)$$

It is henceforth sufficient to apply the additional unitary transformation $V_{\text{resh}}^{(r)}$ (implementing a permutation of Majorana modes according to $\sigma^{(r)}$ to realize $V^{(r)}$, once a circuit realizing the first round ($V = V_{\text{sup}} V_{\text{pair}}$) is in place. Importantly, in the 2D layouts from Fig. 3 (see also Fig. 4 in Sec. IV which represents a scheme for the estimation of quantum chemistry Hamiltonians) the permutation $\sigma^{(r)}(r = 1, \dots, K)$ and $\pi$ (a permutation implemented by $V_{\text{pair}}$) can be realized by vertical shifts of selected columns of the arrangement of Majorana modes - this makes them feasible for experimental implementation in two dimensional architectures as explained in Sec. 5.

## V. Implementation of measurement strategies

*General strategy.* In this part we discuss how to implement our measurement scheme on a quantum computer. In standard fermion-to-qubit mappings (like Jordan-Wigner, Parity, Bravyi-Kitaev, or superfast encodings), unitaries from step (i) can be implemented via a depth 1 circuit consisting of Pauli gates. On the other hand, the realization of $V \in \text{FLO}(N)$ from step (ii) can be achieved with a circuit of depth at most $d_{\text{gen}} = \mathcal{O}(N^3)$ and $n_{\text{gen}} = \mathcal{O}(N^4)$ two-qubit gates. This follows from two observations. First, arbitrary $V \in \text{FLO}(N)$ can be realized by $V = \tilde{V} \gamma_1^s$, where $\tilde{V}$ is parity preserving (i.e., it commutes with $Q = \gamma_{[2N]}$), and $\gamma_1^s$ (s=0,1) is responsible for the (optional) change of the parity. It is known [Jiang2018, Oszmaniec2022] that $\tilde{V}$ can be implemented using $\mathcal{O}(N^2)$ gates of the form $\exp(i\varphi\gamma_{i,i+1})$. Second, each of the unitaries $\exp(i\varphi\gamma_{ij})$ can be realized in depth $\mathcal{O}(N)$, which is a consequence of the fermion-to-qubit encoding which maps $\gamma_{ij}$ into a Pauli string with support on at most $\mathcal{O}(N)$ qubits, and thus realizable in depth $\mathcal{O}(N)$ and using $\mathcal{O}(N)$ gates (unitaries $\exp(i\varphi P)$, for a Pauli string supported on k qubits can be implemented via $\mathcal{O}(k)$ two-qubit gates) \cite{nielsen00}. However, when using the Jordan-Wigner encoding on a line it is possible to realize $V \in \text{FLO}(N)$ using $\mathcal{O}(N)$ layers of $\exp(i\varphi\gamma_{i,i+1})$ applied in parallel and forming a brickwork on a triangle layout. Furthermore, in the Jordan-Wigner encoding $\exp(i\varphi\gamma_{i,i+1})$ can be realized by a constant depth unitary acting on neighbouring qubits, and rotations corresponding to disjoint Majorana pair operators belonging to each layer can be realized in parallel (cf.

[Jiang2018] or [Oszmaniec2022]). This yields the overall depth $d_{\text{JW}} = \mathcal{O}(N)$ and the two-qubit gate count $n_{\text{JW}} = \mathcal{O}(N^2)$.

*A square qubit grid in Jordan-Wigner encoding.* Our joint measurement scheme tailored to Majorana pairs and quadruples can be realized with smaller circuit depth $d_{2D} = \mathcal{O}(\sqrt{N})$ and using $n_{2D} = \mathcal{O}(N^{3/2})$ two-qubit gates gates in 2D layout of qubits. Consider a $(L + 1) \times L/2$ lattice of qubits realizing $L(L + 1)$ Majorana modes via Jordan-Wigner encoding (see Fig. 4 - see Fig. 1, part (b)). In Section IV we described specific FLO unitaries $V_{\text{pair}}$, $V_{\text{sup}}$, $V_{\text{resh}}^{(r)}$ that define measurement rounds of the protocol from Proposition 2. Importantly, for the variant of Jordan-Wigner encoding in which Majorana operators are labelled as in Fig. 3, both $V_{\text{sup}}$, as well as $V_{\text{pair}}$, $V_{\text{resh}}^{(r)}$ can be implemented in depth $\mathcal{O}(N^{1/2})$ and $\mathcal{O}(N^{3/2})$ two-qubit gates. In what follows we sketch the reasoning behind these estimates.

First, the superposition unitary $V_{sup}$ corresponds to direct sum of orthogonal transformations which independently affect the rows in which the Majorana modes are arranged in Fig. 3 (see also Eq. (14)). Such transformations are consistent with the ordering giving rise to JW encoding and therefore can be implemented by a product of L+1 independent FLO unitaries, each acting on qubits arranged in a given row. Therefore $V_{sup}$ can be implemented in depth $\mathcal{O}(N^{1/2})$ and $\mathcal{O}(N^{3/2})$ nearest-neighbour two-qubit gates.

It is more challenging to implement the unitaries $V_{pair}$ and $V_{\text{resh}}^{(r)}$. Note that, as explained in Section IV, permutations $\pi$ and $\sigma^{(r)}$ that correspond to unitaries $V_{pair}$ and $V_{\text{resh}}^{(r)}$ respectively, are "purely vertical", in the sense that they correspond to orthogonal transformations $R_{\pi/\sigma^{(r)}} = \bigoplus_{\beta=1}^{M} \tau^\beta$, where $\tau^\beta$ only permutes indices in the \beta--th column. Importantly, in [Jiang2018] (see also [Cade2020]), it was shown that such a class of FLO gates can be implemented in depth $\mathcal{O}(L) = \mathcal{O}(N^{1/2})$ and using $\mathcal{O}(L^3) = \mathcal{O}(N^{3/2})$ two-qubit gates, by utilizing one extra auxiliary qubit per row.

## VI. Strategy for physical fermionic Hamiltonians

In this part we present a detailed description of the measurement strategy applied to estimating expectation values of Hamiltonians describing electronic degrees of freedom of quantum chemistry systems. After limiting to a specific choice of fermionic modes, the Hamiltonians can be expressed as a linear combination of Majorana fermion observables [Zhao2020]:

$$H = \sum_{A \in \mathcal{X}_4} h_A \gamma_A , \qquad (16)$$

where $h_A \in R$ and $\mathcal{X}_4$ is the set of 2- and 4-element subsets of [2N] such that each 2-element subset contains an even and odd integer, and each 4-element subset contains 2 even and 2 odd integers. In other words, in quantum chemistry Hamiltonians even Majorana operators couple only to odd Majorana operators whereas the only possible couplings for quadruples are those with two even and two odd operators. The physical reason for this comes from the fact that electrons have only two-body interactions (via the Coulomb potential) and there is no spin-dependent interaction or potential affecting them. It is henceforth sufficient to design a strategy which estimates noisy versions of Majorana pair and quadruple operators restricted to those in Eq. (16).

In contrast to the original measurement strategy which we described for the system size 2N=L(L+1), it is now convenient to consider $2N = 2L^2$. With this assumption, a rectangular $L \times L$ lattice of qubits encoding $L^2$ fermionic modes (and $2L^2$ Majorana modes) via the Jordan-Wigner transformation can be conveniently used to design an efficient measurement scheme for estimating expectation values of the operators in the decomposition of H. Systems which don't satisfy this can always be encoded in a larger one which does.

To construct an estimator for tr($H\rho$) we will apply 4 measurement *rounds* (settings), each dependent on a unitary $V^{(r)}$ of the form given in Eq. (15). In contrast to the randomized scheme in Sec. III, we implement each of the four FLO transformations deterministically. These are chosen to ensure that all terms in $\mathcal{X}_4$ can be estimated after only 4 rounds.

### A. Choice of the fermionic Gaussian unitaries

In a given round a unitary $V^{(r)} \in$ FLO($N$) (corresponding to $R^{\{(r)\}} \in O(2N)$) is constructed in order to simultaneously measure all quadratic terms in H and a subset of the quartic terms such that every quartic term is measured in at least one of the 4 rounds. An example of 4 rounds satisfying this property is presented in Fig. 4. A key feature of the chosen unitary, which has the form $V^{(r)} = V^{(r)}_{\text{resh}} V_{\text{sup}} V_{\text{pair}}$ from Eq. (15), is that it can be decomposed into a product of unitaries which act only within a row or column of the 2D layout of qubits, similarly as formulated in Eq. formulated in (15) for the strategies aiming at estimating all Majorana pairs and quadruples.

The construction of the unitaries $V_{\text{pair}}$, $V_{sup}$ and $V^{(r)}_{\text{resh}}$ can be summarized as follows:

(i) The $2N = L^2$ Majorana modes are arranged on an $L \times 2L$ grid and partitioned into even and odd subsets (clusters), which we label $E^{(r)}_i$ and $O^{(r)}_i$, respectively, each of which contain L modes (see Fig. 4 for an example).

(ii) The unitary $V_{\text{pair}}$, which is identical for each round, is defined by the permutation $\pi$ which permutes the standard pairings $\{(2j-1,2j)\}^N_{j=1}$ of modes to $\{(\pi(2j-1),\pi(2j))\}^N_{j=1}$ via cyclical shifts of the columns of the $L \times 2L$ grid (the black lines in Fig. 4 (left) correspond to the pairings). The pairings ensure all even clusters are connected to all odd clusters exactly once.

(iii) The unitary $V_{\text{sup}}$, which is also identical for each round, maps the operators in each cluster (coloured blue (odd) and green (even) in Fig. 4) to a balanced superposition. In particular, $V^{(r)}_{\text{sup}}$ acts via a flat orthogonal matrix on each cluster $O_i$ and $E_i$, transforming every $\gamma_k$, $k \in E_i$, into a balanced superposition $\tilde{\gamma}_k = \sum_{l\in E_i} b^{(i)}_{lk} \gamma_l$, with $b^{(i)}_{lk} = \Omega\left(N^{-1/4}\right)$, and similarly for $k \in O_i$.

(iv) The unitary $V^{(r)}_{resh}$, which depends on the round, is defined by a permutation $\sigma^{(r)}$ mapping the original even and odd clusters of round 1 into a new set of clusters $\sigma^{(r)}(E_i) = E^{(r)}_i$ and $\sigma^{(r)}(O_i) = O^{(r)}_i$ using only column operations. This implements a variant of $V^{(r)}_{resh}$ from Eq. 15, where the reshuffling doesn't mix even and odd modes. In Fig. 4 this corresponds to the blue (odd) and green (even) arrows presented in rounds 2, 3, 4. In round 1 no reshuffling is done.

### B. The 4 rounds' outline

In this section we outline the intuition behind the construction of each round's FLO unitary.

*Round 1.* In the initial round measurement pairings $\{\pi(2j-1),\pi(2j)\}^N_j$ are constructed by a permutation of the standard set $\{(2j-1,2j)\}^N_{j=1}$ of commuting Majorana pairs, analogously to the couplings of rows pictured in Fig. 3. Here the the second and third even columns are permuted cyclically by 1 and 2 respectively (see Fig. 4). Recall from previous section that the odd modes are divided into L clusters $O_1, \ldots, O_L$ and the even modes into L clusters $E_1, \ldots, E_L$ each containing L modes. Within those clusters they are put into balanced superposition. This is done with a Gaussian unitary with a corresponding $R^{(r)} \in O(2N)$ s.t. for every cluster $C: \forall_{i,j \in c} \det\left(R^{(r)}_{ij,ij}\right) \neq 0$ . This can be achieved with lower-flat matrices described in [McNulty2023b]. Note that each even cluster $E_i$ gets coupled with each odd cluster $O_j$ by the pairing of $\pi(2j$ - $1)$, $\pi(2j)$. And so each even-odd pair can be measured jointly. What is more, with measurement of two Majorana pairs of the form $\pi(2j$ - $1)$, $\pi(2j)$, this also guarantees the simultaneous measurement of such quartic terms for which every mode was in different cluster (e.g. $\gamma_{1,2,7,8}$ in Fig. 4). To guarantee measurement of quartic terms where this is not the case, subsequent rounds are constructed.

*Round 2.* In this round the odd modes are permuted between clusters relative to round 1, so that the first mode in a given cluster O_k remains there, the second mode goes to cluster O_{k+1}, the third to O_{k+2} and so on (where k, k+1, k+2, ... are indices periodic within [1, L]). Because there are as many even clusters as modes in a cluster, this guarantees that no two modes which were previously in the same cluster are in the same cluster in this round. Thus this allows for measurement of quartic terms whose even terms were in different clusters in round 1 and whose odd terms were in the same cluster (e.g. \gamma_{1, 2, 3, 8} in Fig. 4).

*Round 3.* Here the even modes are permuted between clusters relative to round 1, in a way analogous to the odd ones in the previous round. This allows for measurement of quartic terms whose odd terms were in different clusters in round 1 and whose even terms were in the same cluster (e.g. $\gamma_{1,2,4,7}$ in Fig. 4).

*Round 4.* In this round both the even and the odd modes are permuted between clusters, relative to round 1, in a way analogous to the previous two rounds. This allows for measurement of quartic terms whose even terms were in the same cluster and odd terms were in the same cluster in round 1 (e.g. $\gamma_{1,2,3,4}$ in Fig. 4).

## C. Assignment of measured pairs to a given Majorana term

Recall from Section III that for measurement of a Majorana term $\gamma_A$, we look at measurement outcomes on subsets $B' \subset [N]$ of the N commuting Majorana pairs $\gamma_{2i\text{-}1,2i}$ s.t. $|B'| = |A|/2$. In the strategy for physical fermionic Hamiltonians we instead look at pairs from the set of permuted standard pairings, $\{(\pi(2j-1), \pi(2j))\}_{j=1}^{N}$ . In a given r--th round for a given Majorana operator $\gamma_A \in \mathcal{X}_4$ we choose a *unique* subset $B' \subset [N]$ ($|B'| = 1$ for pairs and $|B'| = 2$ for quadruples), labelling elements from the set of permuted standard pairings, whose measurement will allow for the measurement of $\gamma_A$. We denote such choice $F'(A, r):(A,r) \rightarrow [N]$. We also define $F(A,r) = \cup_{j \in F'(A,r)}\{2j\text{-}1,2j\}$. Then $|F(A,r)| = |A|$. $F'$ is chosen such that $det(R^{(r)}|_{A,F(A,r)}) \neq 0$. If no such choice is possible in a given round, $F'(A, r) = \varnothing$.

We will denote by

$$\mathcal{M}^{(r)}$$

the set of all $A \in \mathcal{X}_4$ which can be measured in round r and thus for which $F'(A,r) \neq \varnothing$. Note that for quartics it is possible that there exist multiple possible choices for $F'(A,r)$ (e.g. to estimate $\gamma_{1,2,3,4}$ we may choose commuting pairs which allow for measurement of $\gamma_{1,2}$ and $\gamma_{3,4}$ or alternatively $\gamma_{1,4}$ and $\gamma_{2,3}$). In that case we choose the one which has greater absolute value of the corresponding minor $det(R^{(r)}|_{A,F(A,r)})$ and will provide greater visibility $\eta_A$.

## D. Hamiltonian estimator

For the Hamiltonian of Eq. (16), a "single--shot" estimator constructed from the outcomes of the 4 measurement settings described above can be defined as

$$\hat{H} = \sum_{A \in \mathcal{X}_4} \sum_{r:A \in \mathcal{M}^{(r)}} \alpha_A^{(r)} h_A \hat{\gamma}_A^{(r)} \ , \qquad (17)$$

where $\hat{\gamma}_A^{(r)} = \eta_A^{-1} e_A$ is the estimator from Eq. (10) implemented with the unitary $V^{(r)}$ and with the choice *of* $B' \subset [N]$ as described in Sec. VI C. For every $A \in \mathcal{X}_4$, the coefficients $\alpha_A^{(r)} \in \mathbb{R}$ satisfy $\alpha_A^{(r)} = 0$ for

$$A \notin \mathcal{M}^{(r)}$$

and furthermore $\sum_{r:A\in\mathcal{M}^{(r)}} \alpha_A^{(r)} = 1$, which ensures that $\sum_{r:A\in\mathcal{M}^{(r)}} \alpha_A^{(r)}\hat{\gamma}_A^{(r)}$ is an unbiased estimator of

expectation value of $\gamma_A$, in the sense that $\mathbb{E}\left(\sum_{r:A\in\mathcal{M}^{(r)}} \alpha_A^{(r)}\hat{\gamma}_A^{(r)}\right) = \text{tr}(\rho\,\gamma_A)$.

To improve the efficiency of our estimation strategy we can apply the median-of-means approach (in analogy with classical shadows \cite{huang20}). This provides a simple classical post-processing which can reduce the effect of estimation errors. In this case the sample complexity is bounded by the variance of the estimator, which for our scheme is given by

$$\text{Var}(\hat{H}) = \sum_{r=1}^{4} \sum_{A,B\in\mathcal{M}^{(r)}} \alpha_A^{(r)}\alpha_B^{(r)} h_A h_B \text{Cov}\left(\hat{\gamma}_A^{(r)}\hat{\gamma}_B^{(r)}\right), \qquad (18)$$

where the formula for the covariance is specified in Eq. (A6).

## VII. Numerical benchmarks

*Benchmark on molecular Hamiltonians.* We benchmark our strategy on molecular Hamiltonians that are commonly used in the literature (see e.g. [Zhao2021,Wan2023, Hadfield2022, Huggins2021, McNulty2023a]). From Eq. (18) we calculate the variance of our estimator on the ground state of the Hamiltonian. Table 1 presents a comparison of the variances from our measurement strategy with other approaches. For further details on variance calculations for other strategies see [Zhao2021].

TABLE 1. Comparison of variances for estimating energies for standard benchmark molecules. The variances are calculated for the ground states of five molecular Hamiltonians, with units $Ha^2$. The first four strategies are taken from a summary in [Zhao2021] of the following methods: classical shadows with Pauli measurements (CS Pauli [Huang2020]); locally biased classical shadows (LBCS [Hadfield2022]); basis-rotation grouping (BRG [Huggins2021]); and classical shadows with fermionic Gaussian unitaries (CS (FGU) [Zhao2021]). Where applicable, the Jordan-Wigner encoding was used. The last column summarises our results.

| Molecule (qubit) | CS Pauli [Huang2020] | LBCS [Hadfield2022] | BRG [Huggins2021] | CS (FGU) [Zhao2021] | This work |
|---|---|---|---|---|---|
| H2 (8) | 51.4 | 17.5 | 22.6 | 69.6 | 341 |
| LiH (12) | 266 | 14.8 | 7 | 155 | 128 |
| BeH2 (14) | 1670 | 67.6 | 68.3 | 589 | 281 |
| H2O (14) | 2840 | 257 | 6559 | 8440 | 1620 |
| NH3 (16) | 14400 | 353 | 3288 | 5846 | 1157 |

It is worth noting that our estimator requires 4 distinct rounds. For a fair comparison with other strategies, requiring a single round, when comparing the bound of sample complexity based on the variance, we should multiply our variance by 2.

For the calculations in Table 1 we chose the coefficients $\alpha_A^{(r)}$ in our estimator Eq. (17) to be uniform over the relevant rounds, i.e. $\alpha_A^{(r)} = 1/f$ if

$$A \in \mathcal{M}^{(r)},$$

where f is the number of times A appears in the four sets

$$\mathcal{M}^{(r)}.$$

*Classical simulation of strategy.* Taking advantage of the fact that FLO circuits can be efficiently classically simulated, we implemented a simulation of our strategy on Gaussian states, whose energies can be easily analytically calculated. We used the package FLOYao.jl [J. L. Bosse, Floyao (2022)] to classically simulate individual runs of our protocol. We verified that the strategy correctly (up to statistical precision) estimates the molecular Hamiltonians described above on random Gaussian states. We also compared the empirical variance of this estimation to the variance given by our formula Eq. (18) and obtained the same values (within statistical precision), confirming the accuracy of the expression for the estimator's variance.

**Appendix A: Variance of the Hamiltonian estimator**

The variance of the estimator defined in Eq. (17) is given by:

$$\text{Var}\big(\hat{H}\big) = \mathbb{E}\big(\hat{H}^2\big) - \big[\mathbb{E}\big(\hat{H}\big)\big]^2 \qquad (A1)$$

$$= \mathbb{E}\left( \sum_{p,r=1}^{4} \sum_{A \in \mathcal{M}^{(p)}} \sum_{B \in \mathcal{M}^{(r)}} \alpha_A^{(p)} \alpha_B^{(r)} h_A h_B \hat{\gamma}_A^{(p)} \hat{\gamma}_B^{(r)} \right)$$

$$- \mathbb{E}\left( \sum_{p=1}^{4} \sum_{A \in \mathcal{M}^{(p)}} \alpha_A^{(p)} h_A \hat{\gamma}_A^{(p)} \right) \cdot \mathbb{E}\left( \sum_{p,r=1}^{4} \sum_{B \in \mathcal{M}^{(r)}} \alpha_B^{(r)} h_B \hat{\gamma}_B^{(r)} \right) \qquad (A2)$$

$$= \sum_{p,r=1}^{4} \sum_{A \in \mathcal{M}^{(p)}} \sum_{B \in \mathcal{M}^{(r)}} \alpha_A^{(p)} \alpha_B^{(r)} h_A h_B \left[ \mathbb{E}\left( \hat{\gamma}_A^{(p)} \hat{\gamma}_B^{(r)} \right) - \mathbb{E}\left( \hat{\gamma}_A^{(p)} \right) \mathbb{E}\left( \hat{\gamma}_B^{(r)} \right) \right] \qquad (A3)$$

$$= \sum_{p,r=1}^{4} \sum_{A \in \mathcal{M}^{(p)}} \sum_{B \in \mathcal{M}^{(r)}} \alpha_A^{(p)} \alpha_B^{(r)} h_A h_B \left[ \text{Cov}\left( \hat{\gamma}_A^{(p)} \hat{\gamma}_B^{(r)} \right) \right] \qquad (A4)$$

$$= \sum_{p,r=1}^{4} \sum_{A \in \mathcal{M}^{(p)}} \sum_{B \in \mathcal{M}^{(r)}} \alpha_A^{(p)} \alpha_B^{(r)} h_A h_B \left[ \mathbb{E}\left( \hat{\gamma}_A^{(p)} \hat{\gamma}_B^{(r)} \right) - \text{Tr}(\gamma_A)\text{Tr}(\gamma_B) \right], \qquad (A5)$$

where the last step could be made because:

$$\text{Cov}\left( \hat{\gamma}_A^{(p)} \hat{\gamma}_B^{(r)} \right) = \begin{cases} 0 \text{ if } p \neq r, \\ \mathbb{E}\left( \hat{\gamma}_A^{(p)} \hat{\gamma}_B^{(r)} \right) - \text{Tr}(\gamma_A)\text{Tr}(\gamma_B) \text{ if } p = r, \end{cases} \qquad (A6)$$

as the estimators from distinct rounds are independent. We also have:

$$E\left(\hat{\gamma}_A^{(r)},\hat{\gamma}_B^{(r)}\right\} = \begin{cases} \dfrac{\det\left(R_{A\Delta B,F(A,r)\Delta F(B,r)}^{(r)}\right)\mathrm{Tr}(\gamma_{A\Delta B}\rho)}{\det\left(R_{A,F(A,r)}^{(r)}\right)\det\left(R_{B,F(B,r)}^{(r)}\right)}\delta_{|F(A,r)\Delta F(B,r)|,|A\Delta B|} & \text{if } A \neq B, \\[2em] \dfrac{1}{\left(\det\left(R_{A,F(A,r)}^{(r)}\right)\right)^2} & \text{if } A = B, \end{cases} \qquad (A7)$$

where $R^{(r)} \in O(2N)$ corresponds to the FLO unitary $V^{(r)}$ implemented in the r-th round of the strategy, $\Delta$ denotes the symmetric difference of sets and $F(A,r)$ is defined in Sec. VI C.

**Appendix B: Number of measurement settings ensuring all quadruples are measured in 2D setting**

Below we will show that at most seven (7) vertical permutations of rectangular layouts of modes considered in the main text suffice to ensure measurability of all Majorana quadruples (for the case when L+1 is a prime number). Let $Q$ be arrangement of $\tilde{N} = l \cdot k$ different symbols placed in square boxes arranged in l\times k rectangular pattern (note that in what follows l plays a role of L+1 from the main text). Let

$$\pi = \pi_{v_1}^{(1)}\pi_{v_2}^{(2)}\dots\pi_{v_k}^{(k)} \qquad (B1)$$

be a permutation consisting of independent cyclic shifts of columns of Q by distance $v_i \in \{0,1,\dots,l-1\}$ (the shifts $\pi_{v_i}^{(i)}$ are modulo $l$, because there are only this many elements in each column of $Q$. Let $\pi(Q)$ denotes the transformed version of $Q$, in which every box of $Q$ is moved according to action of permutation $\pi$.

Lemma1. *Let $l \geq 7$ be a prime number and let $k \geq 4$. Consider a permutation \pi as in Eq. (B1) chosen in such a manner that$v_i \neq v_j$ for $i \neq j (i,j \in [k])$. Then for every quadruple $(q_1, q_2, q_3, q_4)$ of distinct elements in Q, elements $q_i$ can be found in different rows if at least one of the arrangements of $Q$, $\pi(Q, \dots, \pi^6(Q)$, where $\pi^a$ denotes a'th iteration of the permutation $\pi$.*

*Proof.* To every quadruple $q = (q_1, q_2, q_3, q_4)$ we can assign four vertical positions $y_1, y_2, y_3, y_4$, which denote the vertical position of element $q_i$ in an array. We will assume that elements of *a* belong to four distinct columns of $Q$ and furthermore, without loss of generality, that element $q_i$ belongs to i'th column (the proof for the case when some of the q's belong to the same column is analogous). After $r = 0,1, \dots$, applications of $\pi$ to $q$ the vertical positions of $x_i$ take the form

$$x_i(r) = x_i + r \cdot v_i \mod l. \qquad (B2)$$

The evolution of differences in vertical positions $\Delta_{ij}$ is analogous

$$\Delta_{ij}(r) = \Delta_{ij} + r \cdot v_{ij} \mod l, \qquad (B3)$$

where $v_{ij} = v_i - v_j \neq 0$. Note that elements $\pi^r(q)$ are in distinct rows of $\pi^r(Q)$ if and only if $\Delta_{ij}(r) \neq 0$ for all $i > j$. Therefore, we need to ensure that at least for one of $r = 0,1, \dots, 6$ we have $\Delta_{ij}(r) \neq 0$. This follows from tring to find "time" $r_{ij}$ such that collisions between elements $q_i$ and $q_j$ take place: $\Delta_{ij}(r_{ij}) = 0$. Since this is a linear equation for $r_{ij}$ and $l$ was set to be a prime number, it has a unique solution $r_{ij}^* \in \{0,1,\dots,l-1\}$. Note that since we are looking at four elements in $q$, there are only $\binom{4}{2} = 6$ equations $\Delta_{ij}(t_{ij}) = 0$ to consider. Each of them as a unique solution $r_{ij}^*$ and there are at most 6 of them. Therefore, for at least one $r \in \{0,1,\dots,6\}$ equations $\Delta_{ij}(r) = 0$ cannot be simultaneously satisfied. $\square$

**References**

[Bauer 2020] Bauer, Bela, et al. "Quantum algorithms for quantum chemistry and quantum materials science." Chemical Reviews 120.22 (2020): 12685-12717.

[Bharti2022] Bharti, Kishor, et al. "Noisy intermediate-scale quantum algorithms." Reviews of Modern Physics 94.1 (2022): 015004.

[Preskill2018] Preskill, John. "Quantum computing in the NISQ era and beyond." Quantum 2 (2018): 79.

[Jena2019] Jena, Andrew, Scott Genin, and Michele Mosca. "Pauli partitioning with respect to gate sets." arXiv preprint arXiv:1907.07859 (2019).

[Gokhale2019] Gokhale, Pranav, et al. "Minimizing state preparations in variational quantum eigensolver by partitioning into commuting families." arXiv preprint arXiv:1907.13623 (2019).

[Yen2020] Yen, Tzu-Ching, Vladyslav Verteletskyi, and Artur F. Izmaylov. "Measuring all compatible operators in one series of single-qubit measurements using unitary transformations." Journal of chemical theory and computation 16.4 (2020): 2400-2409.

[Huang2020] Huang, Hsin-Yuan, Richard Kueng, and John Preskill. "Predicting many properties of a quantum system from very few measurements." Nature Physics 16.10 (2020): 1050-1057.

[Hadfield2022] Hadfield, Charles, et al. "Measurements of quantum Hamiltonians with locally-biased classical shadows." Communications in Mathematical Physics 391.3 (2022): 951-967.

[Hu2023] Hu, Hong-Ye, Soonwon Choi, and Yi-Zhuang You. "Classical shadow tomography with locally scrambled quantum dynamics." Physical Review Research 5.2 (2023): 023027.

[Zhao2021] Zhao, Andrew, Nicholas C. Rubin, and Akimasa Miyake. "Fermionic partial tomography via classical shadows." Physical Review Letters 127.11 (2021): 110504.

[Low2022] Low, Guang Hao. "Classical shadows of fermions with particle number symmetry." arXiv preprint arXiv:2208.08964 (2022).

[McNulty2023a] McNulty, Daniel, Filip B. Maciejewski, and Michat Oszmaniec. "Estimating Quantum Hamiltonians via Joint Measurements of Noisy Noncommuting Observables." Physical Review Letters 130.10 (2023): 100801.

[Busch1986] Busch, Paul. "Unsharp reality and joint measurements for spin observables." Physical Review D 33.8 (1986): 2253.

[Heinosaari2008] Heinosaari, Teiko, Daniel Reitzner, and Peter Stano. "Notes on joint measurability of quantum observables." Foundations of Physics 38 (2008): 1133-1147.

[Zhao2022] Zhao, Andrew, et al. "Measurement reduction in variational quantum algorithms." Physical Review A 101.6 (2020): 062322.

[Wan2023] K. Wan, W. J. Huggins, J. Lee, and R. Babbush, Communications in Mathematical Physics, 404, 629 (2023)

[McClean2016] J. R. McClean, J. Romero, R. Babbush, and A. Aspuru-Guzik, New J. Phys.18, 023023 (2016).

[Perez2021] G. García-Pérez, M. A. Rossi, B. Sokolov, F. Tacchino, P. K. Barkoutsos, G. Mazzola, I. Tavernelli, and S. Maniscalco, PRX Quantum 2,, 040342 (2021)

[Verteletsky2020] Verteletskyi, T. C. Yen, and A. F. Izmaylov, J. Chem. Phys.152, 124114 (2020).

[Crawford2021] O. Crawford, B. V. Straaten, D. Wang, T. Parks, E. Campbell, and S. Brierley, Quantum 5, 385 (2021).

[Izmaylov2020] A. F. Izmaylov, T. C. Yen, R. A. Lang, and V. Verteletskyi, J.Chem. Theory Comput. 16, 190 (2020).

[Zhao2020] A. Zhao, A. Tranter, W. M. Kirby, S. F. Ung, A. Miyake, and P. J.Love, Phys. Rev. A 101, 062322 (2020).

[Jiang2018] Z. Jiang, K. J. Sung, K. Kechedzhi, V. N. Smelyanskiy, and S. Boixo, Phys. Rev. Appl. 9, 044036 (2018).

[Oszmaniec2022] M. Oszmaniec, N. Dangniam, M. E. Morales, and Z. Zimborás, PRX Quantum 3, 020328 (2022).

[Cade2020] C. Cade, L. Mineh, A. Montanaro, and S. Stanisic, Phys. Rev. B 102, 235122 (2020).

[Huggins2021] W. J. Huggins, J. R. McClean, N. C. Rubin, Z. Jiang, N. Wiebe, K. B. Whaley, and R. Babbush, npj Quantum Inf. 7, 1 (2021).

**Claims**

1. A method for estimating fermionic k-body reduced density matrices and expectation values of fermionic Hamiltonians on a quantum computer, comprising the steps of:

    • step i) implementing a joint measurement of noisy versions of products of Majorana fermion operators,
    • step ii) directly using estimates of expectation values of said products of Majorana fermion operators accessible from outputs in a post-processing of the results of the measurements performed in a computational basis on a quantum computer for estimating the fermionic k-body reduced density matrices and expectation values of fermionic Hamiltonians.

2. The method according to claim 1, wherein implementation of the joint measurement of noisy versions of Majorana fermion operators in step i is realized by the following actions:

   a) a unitary transformation realizing a randomly chosen product of the Majorana fermion operators,
   b) one or more global Gaussian fermionic unitary transformation
   c) implementing said measurement in a computational basis thereby obtaining a bitstring encoding of the output,

   and afterwards performing a classical post-processing of the bitstring encoding of the output, based on the product of the Majorana operators of step a) and the global Gaussian fermionic unitary transformation of step b).

3. The method according to claim 2, wherein the global Gaussian fermionic unitary transformation are chosen as

   • Gaussian unitaries realizing Haar random orthogonal transformations of Majorana modes, or
   • Structured operations $V$ of the form, $V = V_{sup}V_{pair}$ , where

      ∘ $V_{sup}$ realizes a flat superposition of Majorana modes belonging to disjoint subsets $X_\alpha$ forming a partition of the set of all 2N Majorana Modes
      ∘ $V_{pair}$ realizes a permutation $\pi$ of Majorana modes constructed in a manner that ensures that every two subsets $X_\alpha$, $X_\beta$ over which a uniform superposition is generated by $V_{sup}$ are connected by the pairing $(\pi(2i - 1), \pi(2i))$ , for some $i$.

4. The method according to claims 2 or 3, wherein a pre-defined fermion-to-qubit mapping is used for encoding of the fermionic system into the quantum computer, consisting of distinguishable qubits, in which the Majorana fermion operators are encoded as strings of Pauli operators.

5. The method according to claim 4, wherein the joint measurement of noisy versions of products of Majorana fermion operators in step i is realized by the following actions:

   a) implementing a single layer of randomly chosen Pauli gates,
   b) implementing of one or more global Gaussian fermionic unitary transformation encoded into a sequence of two-qubit quantum gates realized on the quantum computer, specific to the fermion-to-qubit mapping of claim 4,
   c) implementing said measurement in a computational basis thereby obtaining a bitstring encoding of the output,

   and afterwards performing a classical post-processing of the bitstring encoding of the output, based on the product of the Majorana operators of step a) and the global Gaussian fermionic unitary transformation of step b).

6. The method according to claim 5, wherein fermion-to qubit mapping is realized on a rectangular arrangement of qubits, realizing a Jordan Wigner transformation and four Gaussian fermionic unitaries, which are used to implement the estimation of expectation value of the fermionic quantum Hamiltonian.

7. A system comprising a quantum computer and a classical computer, programmed and configured for implementing the method according to any one of the preceding claims.

8. A computer program comprising instructions which, when the program is executed by the classical computer in the system according to claim 7, cause the system to carry out the method of any one of claims 1 to 6.

a) $Q_1$ $Q_2$ $Q_3$ $Q_4$ ...

b) $Q_1$ $Q_2$ $Q_3$ $Q_4$ $Q_5$ $Q_6$ $Q_7$ $Q_8$ $Q_9$ $Q_{10}$

**Fig. 1**

**Fig. 2**

Fig. 3

Fig. 4

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | DANIEL MCNULTY ET AL: "Estimating Quantum Hamiltonians via Joint Measurements of Noisy Non-Commuting Observables", ARXIV.ORG, CORNELL UNIVERSITY LIBRARY, 201 OLIN LIBRARY CORNELL UNIVERSITY ITHACA, NY 14853, 12 March 2023 (2023-03-12), XP091462921, DOI: 10.1103/PHYSREVLETT.130.100801 * abstract * * page 1, left-hand column, line 1 - page 6, left-hand column, line 3 * * page 7, left-hand column, line 15 - page 14, right-hand column, last line * | 1-8 | INV. G06N10/20 |
| A,D | US 2018/053112 A1 (BRAVYI SERGEY [US] ET AL) 22 February 2018 (2018-02-22) * claims 1-25; figures 1-12 * * paragraph [0002] - paragraph [0009] * * paragraph [0024] - paragraph [0154] * | 1-8 | |
| A,D | US 2022/188682 A1 (VAN DEN BERG EWOUT [US] ET AL) 16 June 2022 (2022-06-16) * abstract; claims 1-25; figures 1-10 * * paragraph [0001] - paragraph [0012] * * paragraph [0023] - paragraph [0133] * | 1-8 | TECHNICAL FIELDS SEARCHED (IPC) G06N |

-/--

The present search report has been drawn up for all claims

| Place of search | Date of completion of the search | Examiner |
|---|---|---|
| The Hague | 28 May 2024 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

<table>
<tr><td>Europäisches Patentamt<br>European Patent Office<br>Office européen des brevets</td><td style="text-align:center">**EUROPEAN SEARCH REPORT**</td><td>**Application Number**<br><br>EP 23 46 1683</td></tr>
</table>

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Joanna Majsak: "A Simple and Efficient Joint Measurement Strategy for Estimating Fermionic Observables and Hamiltonians", arXiv.org, 29 February 2024 (2024-02-29), pages 1-16, XP093158422, Ithaca DOI: 10.48550/arxiv.2402.19230 Retrieved from the Internet: URL:https://arxiv.org/pdf/2402.19230 [retrieved on 2024-05-03] * abstract * * page 1, left-hand column, line 1 - page 9, right-hand column, line 2 * * page 10, line 5 - page 16, last line *<br>----- | 1-8 | |
| T | Daniel Mcnulty: "Optimal Fermionic Joint Measurements for Estimating Non-Commuting Majorana Observables", arXiv.org, 29 February 2024 (2024-02-29), pages 1-30, XP093158425, Ithaca DOI: 10.48550/arxiv.2402.19349 Retrieved from the Internet: URL:https://arxiv.org/pdf/2402.19349 [retrieved on 2024-05-03] * abstract * * page 1, left-hand column, line 1 - page 12, right-hand column, line 15 * * page 13, line 30 - page 30, last line *<br>----- | 1-8 | TECHNICAL FIELDS SEARCHED (IPC) |

The present search report has been drawn up for all claims

| Place of search | Date of completion of the search | Examiner |
|---|---|---|
| The Hague | 28 May 2024 | Totir, Felix |

EPO FORM 1503 03.82 (P04C01)

page 2 of 2

**ANNEX TO THE EUROPEAN SEARCH REPORT
ON EUROPEAN PATENT APPLICATION NO.**

EP 23 46 1683

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2024

| Patent document cited in search report | Publication date | Patent family member(s) | | Publication date |
|---|---|---|---|---|
| US 2018053112 A1 | 22-02-2018 | CN | 109643326 A | 16-04-2019 |
| | | DE | 112017002971 T5 | 14-03-2019 |
| | | GB | 2566885 A | 27-03-2019 |
| | | JP | 6970735 B2 | 24-11-2021 |
| | | JP | 2019531008 A | 24-10-2019 |
| | | US | 2018053112 A1 | 22-02-2018 |
| | | US | 2019228333 A1 | 25-07-2019 |
| | | WO | 2018033823 A1 | 22-02-2018 |
| US 2022188682 A1 | 16-06-2022 | AU | 2021399066 A1 | 25-05-2023 |
| | | CN | 116529738 A | 01-08-2023 |
| | | EP | 4264507 A1 | 25-10-2023 |
| | | JP | 2024500220 A | 05-01-2024 |
| | | US | 2022188682 A1 | 16-06-2022 |
| | | WO | 2022129204 A1 | 23-06-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20180053112 A1
- US 20230289637 A1
- US 11676056 B2
- AU 2023203460 A1
- US 10922617 B2
- US 20220188682 A1

### Non-patent literature cited in the description

- *Phys. Rev. Lett.*, 2021, vol. 127, 110504
- *Phys. Rev. A*, 2020, vol. 101, 062322
- **D. MCNULTY** ; **F. B. MACIEJEWSKI** ; **M. OSZMANIEC**. *Phys. Rev. Lett.*, 2023, vol. 130, 100801
- **J. L. BOSSE**. *Floyao*, 2022
- **BAUER** ; **BELA et al.** Quantum algorithms for quantum chemistry and quantum materials science. *Chemical Reviews*, 2020, vol. 120 (22), 12685-12717
- **BHARTI** ; **KISHOR et al.** Noisy intermediate-scale quantum algorithms. *Reviews of Modern Physics*, 2022, vol. 94 (1), 015004
- **PRESKILL** ; **JOHN**. Quantum computing in the NISQ era and beyond. *Quantum*, 2018, vol. 2, 79
- **JENA** ; **ANDREW** ; **SCOTT GENIN** ; **MICHELE MOSCA**. Pauli partitioning with respect to gate sets. *arXiv preprint arXiv:1907.07859*, 2019
- **GOKHALE** ; **PRANAV et al.** Minimizing state preparations in variational quantum eigensolver by partitioning into commuting families. *arXiv preprint arXiv:1907.13623*, 2019
- **YEN** ; **TZU-CHING** ; **VLADYSLAV VERTELETSKYI** ; **ARTUR F. IZMAYLOV**. Measuring all compatible operators in one series of single-qubit measurements using unitary transformations. *Journal of chemical theory and computation*, 2020, vol. 16 (4), 2400-2409
- **HUANG** ; **HSIN-YUAN** ; **RICHARD KUENG** ; **JOHN PRESKILL.** Predicting many properties of a quantum system from very few measurements. *Nature Physics*, 2020, vol. 16 (10), 1050-1057
- **HADFIELD** ; **CHARLES et al.** Measurements of quantum Hamiltonians with locally-biased classical shadows. *Communications in Mathematical Physics*, 2022, vol. 391 (3), 951-967
- **HU** ; **HONG-YE** ; **SOONWON CHOI** ; **YI-ZHUANG YOU**. Classical shadow tomography with locally scrambled quantum dynamics. *Physical Review Research*, 2023, vol. 5 (2), 023027
- **ZHAO** ; **ANDREW** ; **NICHOLAS C. RUBIN** ; **AKIMASA MIYAKE**. Fermionic partial tomography via classical shadows. *Physical Review Letters*, 2021, vol. 127 (11), 110504
- **LOW** ; **GUANG HAO**. Classical shadows of fermions with particle number symmetry. *arXiv preprint arXiv:2208.08964*, 2022
- **MCNULTY** ; **DANIEL** ; **FILIP B. MACIEJEWSKI** ; **MICHAT OSZMANIEC**. Estimating Quantum Hamiltonians via Joint Measurements of Noisy Noncommuting Observables. *Physical Review Letters*, 2023, vol. 130 (10), 100801
- **BUSCH** ; **PAUL**. Unsharp reality and joint measurements for spin observables. *Physical Review D*, 1986, vol. 33 (8), 2253
- **HEINOSAARI** ; **TEIKO** ; **DANIEL REITZNER** ; **PETER STANO**. Notes on joint measurability of quantum observables. *Foundations of Physics*, 2008, vol. 38, 1133-1147
- **ZHAO** ; **ANDREW et al.** Measurement reduction in variational quantum algorithms. *Physical Review A*, 2020, vol. 101 (6), 062322
- **K. WAN** ; **W. J. HUGGINS** ; **J. LEE** ; **R. BABBUSH**. *Communications in Mathematical Physics*, 2023, vol. 404, 629
- **J. R. MCCLEAN** ; **J. ROMERO** ; **R. BABBUSH** ; **A. ASPURU-GUZIK**. *New J. Phys*, 2016, vol. 18, 023023
- **G. GARCÍA-PÉREZ** ; **M. A. ROSSI** ; **B. SOKOLOV** ; **F. TACCHINO** ; **P. K. BARKOUTSOS** ; **G. MAZZOLA** ; **I. TAVERNELLI** ; **S. MANISCALCO**. *PRX Quantum*, 2021, vol. 2, 040342
- **VERTELETSKYI** ; **T. C. YEN** ; **A. F. IZMAYLOV**. *J. Chem. Phys*, 2020, vol. 152, 124114
- **O. CRAWFORD** ; **B. V. STRAATEN** ; **D. WANG** ; **T. PARKS** ; **E. CAMPBELL** ; **S. BRIERLEY**. *Quantum*, 2021, vol. 5, 385
- **A. F. IZMAYLOV** ; **T. C. YEN** ; **R. A. LANG** ; **V. VERTELETSKYI**. *J.Chem. Theory Comput.*, 2020, vol. 16, 190

- **A. ZHAO** ; **A. TRANTER** ; **W. M. KIRBY** ; **S. F. UNG** ; **A. MIYAKE** ; **P. J.LOVE**. *Phys. Rev. A*, 2020, vol. 101, 062322
- **Z. JIANG** ; **K. J. SUNG** ; **K. KECHEDZHI** ; **V. N. SMELYANSKIY** ; **S. BOIXO**. *Phys. Rev. Appl.*, 2018, vol. 9, 044036
- **M. OSZMANIEC** ; **N. DANGNIAM** ; **M. E. MORALES** ; **Z. ZIMBORÁS**. *PRX Quantum*, 2022, vol. 3, 020328
- **C. CADE** ; **L. MINEH** ; **A. MONTANARO** ; **S. STANISIC**. *Phys. Rev. B*, 2020, vol. 102, 235122
- **W. J. HUGGINS** ; **J. R. MCCLEAN** ; **N. C. RUBIN** ; **Z. JIANG** ; **N. WIEBE** ; **K. B. WHALEY** ; **R. BABBUSH**. *npj Quantum Inf.*, 2021, vol. 7 (1)